(19)

Europäisches
Patentamt
European
Patent Office
Office européen
des brevets

(11)  EP 3 378 320 A1

(12)  **EUROPEAN PATENT APPLICATION**
published in accordance with Art. 153(4) EPC

(43) Date of publication:
26.09.2018  Bulletin 2018/39

(51) Int Cl.:
*A23B 4/06* (2006.01)    *A23L 3/36* (2006.01)
*F25C 1/00* (2006.01)    *F25D 3/02* (2006.01)

(21) Application number: 16866462.1

(22) Date of filing: 18.11.2016

(86) International application number:
PCT/JP2016/084320

(87) International publication number:
WO 2017/086462 (26.05.2017 Gazette 2017/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 19.11.2015  JP 2015226589
03.03.2016  JP 2016041189
24.05.2016  JP 2016103012
24.05.2016  JP 2016103013
24.05.2016  JP 2016103014
24.05.2016  JP 2016103637
24.05.2016  JP 2016103638
24.05.2016  JP 2016103639
24.05.2016  JP 2016103640
04.07.2016  JP 2016132615

(71) Applicant: Blanctec Co., Ltd.
Tokyo 105-0003 (JP)

(72) Inventors:
• HIROKANE, Yoshio
Tokyo 105-0003 (JP)
• IZUTSU, Tadao
Tokyo 105-0003 (JP)

(74) Representative: Vossius & Partner
Patentanwälte Rechtsanwälte mbB
Siebertstrasse 3
81675 München (DE)

(54)  **ICE MAKING DEVICE, MOVING BODY, FLAKE ICE PRODUCTION DEVICE, AND FLAKE ICE PRODUCTION METHOD**

(57)    Provided is a means for more efficiently generating ice which has a high cooling capacity. A flake ice production device 10 generates ice by cooling the wall surface of an inner cylinder 22 and freezing brine that has adhered to the wall surface of the cooled inner cylinder 22. A spraying unit 13 supplies brine to the wall surface of the inner cylinder 22 by causing the brine to adhere thereto. A stripping unit 14 collects the ice generated on the wall surface of the inner cylinder 22. In addition, the flake ice production device 10 is designed such that formula (1) is satisfied when Y represents an ice making speed indicating the amount of ice generated on the wall surface of the inner cylinder 22 per unit time, and x1 represents the thermal conductance rate of the wall surface of the inner cylinder 22.

Formula (1): $Y = f(x1)$.

FIG. 1

## Description

## TECHNICAL FIELD

The present invention relates to an ice making device, a moving body, a flake ice production device, and a flake ice production method.

## BACKGROUND ART

Hitherto, a method in which plants/animals and such as fresh marine products or portions thereof are cooled with iced water has been adopted as a method for maintaining the freshness of plants/animals such as fresh marine products or portions thereof. However, in the case of ice formed from fresh water, the solute concentration in seawater used for maintaining the freshness decreases as the ice melts. As a result, there is a problem that water intrudes into the body of the plants/animals or portions thereof immersed in the mixture of ice and water by osmotic pressure and the freshness and the like deteriorate.

In view of this, Patent Document 1 discloses a method for generating salt-including ice which is in the form of slurry and has an ice point temperature of from -5°C to -1°C corresponding to the solute concentration by forming raw water such as seawater filtered and sterilized into salt-including water having a solute concentration of about from 1.0% to 1.5% through adjustment of salt concentration and subjecting the salt-including water to quick cooling in a method for ice-making salt-including water prepared by forming salt-including ice obtained through freezing of salt-including water having a solute concentration of approximately from 0.5% to 2.5% into the form of slurry. However, in the conventional techniques including Patent Document 1, there is a problem that the cell tissues of fresh marine products are destroyed and the freshness and taste cannot be maintained since the moisture in the fresh marine products crystallizes when being frozen but the crystal of ice in the fresh marine products grows large. In addition, in the case of the ice obtained by freezing salt water, freezing begins from the part of fresh water having a higher freezing point, the part which is finally frozen is in a situation in which there is a part formed as a small amount of salt water is frozen and a salt precipitated is attached around the ice, and the solute concentration in the ice is nonuniform. Moreover, at the time of melting, the part which is finally frozen melts first and salt water having a high concentration comes out, and thus the melted water has a technical problem that the solute concentration greatly changes in the melting process and the temperature increases toward 0°C. In view of this, the applicant of the present application has already filed a patent application (Japanese Patent Application No. 2016-103637) on a device for producing flake ice which has an excellent cooling capacity and can maintain a non-separating state for a long time.

Patent Document 1: Japanese Unexamined Patent Application, Publication No. 2002-115945

## DISCLOSURE OF THE INVENTION

Problems to be Solved by the Invention

However, in the ice making device including the device for producing flake ice, which has been filed by the applicant of the present application, there has been a demand to realize a technique capable of more efficiently generating ice having a high cooling capacity.

The present invention has been made in view of the above circumstances, and an object thereof is to provide a method for more efficiently generating ice having a higher cooling capacity.

Means for Solving the Problems

In order to achieve the above object, an ice making device of an embodiment of the present invention includes: an ice making unit which has an ice making surface and a cooling unit for cooling the ice making surface and generates ice by freezing brine adhered to the ice making surface cooled; a brine supply unit for supplying the brine to the ice making surface by causing the brine to adhere to the ice making surface; and a collecting unit for collecting the ice generated by the ice making unit, in which the ice making device is designed such that the following formula (1) is satisfied when Y represents an ice making speed indicating an amount of ice generated per unit time and x1 represents a thermal conductivity of the ice making surface in the ice making unit.

$$Y = f(x1) \quad (1)$$

In addition, the ice making device can be configured such that the thermal conductivity of the ice making surface at 20°C is 70 W/mK or more.

In addition, the ice making device can be designed such that the following formula (2) is satisfied when Y represents the ice making speed and x2 represents an area of a part onto which the brine possibly adheres of the ice making surface.

$$Y = f(x2) \quad (2)$$

In addition, the ice making device can further include a refrigerant supply unit for supplying a predetermined refrigerant to the cooling unit in order to cool the ice making surface and can be designed such that the following formula (3) is satisfied when Y represents the ice making speed and x3 represents a temperature of the ice making surface.

$$Y = f(x3) \quad (3)$$

In addition, the brine supply unit can cause the brine to adhere to the ice making surface through spraying.

In addition, the brine supply unit can cause the brine to adhere to the ice making surface through gravity flow.

In addition, the ice making device can be configured such that the thermal conductivity of the ice making surface at 20°C is 70 W/mK or more.

In addition, the refrigerant can be LNG.

In addition, the ice making unit can further include a liner for covering the ice making surface, and the liner can be set to be replaceable.

A flake ice production device of an aspect of the present invention includes the ice making unit, the brine supply unit, and the collecting unit, in which the ice making unit can further include a drum including an inner cylinder having the ice making surface, an outer cylinder surrounding the inner cylinder, and a clearance formed between the inner cylinder and the outer cylinder and a refrigerant supply unit for supplying a refrigerant to the clearance, the brine supply unit can further include an spraying unit which rotates together with a rotary shaft rotating by taking a central axis of the drum as an axis and sprays the brine toward the ice making surface of the inner cylinder, the collecting unit can further include a stripping unit for stripping off ice generated as the brine sprayed through the spraying unit adheres to the inner surface of the inner cylinder cooled by the refrigerant supplied to the clearance, and the flake ice production device can be designed such that the formula (1) is satisfied when Y represents an ice making speed indicating an amount of ice generated per unit time and x1 represents a thermal conductivity of the ice making surface in the ice making unit.

In addition, the thermal conductivity of the ice making surface at 20°C can be set to 70 W/mK or more.

In addition, the flake ice production device can be designed such that the formula (2) is satisfied when Y represents the ice making speed and x2 represents an area of a part onto which the brine possibly adheres of the ice making surface.

In addition, the flake ice production device can be designed such that the formula (3) is satisfied when Y represents the ice making speed and x3 represents a temperature of the ice making surface.

In addition, the brine supply unit can cause the brine to adhere to the ice making surface through gravity flow.

In addition, the refrigerant can be LNG.

In addition, the ice making unit can further include a liner for covering the ice making surface, and the liner can be set to be replaceable.

In addition, the flake ice production device of an aspect of the present invention can be mounted on a moving body.

**Effects of the Invention**

According to the present invention, it is possible to provide a method by which ice having a high cooling capacity is more efficiently generated.

**BRIEF DESCRIPTION OF THE DRAWINGS**

Fig. 1 is an image view including a partial cross-sectional perspective view which illustrates the outline of a flake ice production device according to an embodiment of the ice making device of the present invention.

Fig. 2 is a view illustrating the thermal conductivity of every member to be used for the ice making surface of the flake ice production device in Fig. 1.

Fig. 3 is an image view illustrating the outline of the entire flake ice production system including the flake ice production device in Fig. 1.

**PREFERRED MODE FOR CARRYING OUT THE INVENTION**

<Ice>

Ice generated by using the ice making device of the present invention is ice which satisfies the following conditions (a) and (b) and is from a liquid that includes an aqueous solution including a solute. Incidentally, the term "flake ice" refers to ice which has been processed into a flaky shape: (a) A temperature of the ice after melting completely is lower than 0°C; (b) A rate of change of solute concentration in an aqueous solution to be generated from the ice in melting process is 30% or less.

It is known that solidifying point depression that the solidifying point of the aqueous solution decreases occurs in a case in which a solute is melted in water. By the action of solidifying point depression, the solidifying point of an aqueous solution in which a solute such as common salt is melted decreases. In other words, ice formed from such an aqueous solution is ice which is solidified at a lower temperature than ice formed from fresh water. Here, the heat required when ice converts to water is called "latent heat", but this latent heat is not accompanied by a temperature change. The ice having a decreased solidifying point is sustained in a stable state at a temperature equal to or lower than the solidifying point of fresh water at the time of melting by the effect of such latent heat and thus a state in which the cold energy is saved is sustained. Consequently, the capacity of the ice formed from such an aqueous solution to cool the article to be cooled is inherently higher than that of ice formed from fresh water. However, the inventors of the present invention have found out that ice generated by conventional techniques does not have a sufficient capacity to cool an article to be cooled as the temperature of the ice itself rapidly increases with time at the time of cooling. The inventors of the present invention have investigated the reasons for this, and as a result, have found that in the conventional techniques, ice which does not include a solute is actually produced before the aqueous solution freezes even if the ice is produced from an aqueous solution including a solute such as common salt, and as a result, a mixture of ice which does not include a solute and the solute is produced or ice having a high cooling capacity is not produced since ice having a decreased solidifying point is generated only in a slight amount.

However, the inventors of the present invention have succeeded in the invention of an ice making device capable of producing ice which has a decreased solidifying point and is from a liquid that includes an aqueous solution by a predetermined method (details will be described later). Ice generated by such an ice making device of the present invention satisfies the conditions (a) and (b). Hereinafter, the conditions (a) and (b) will be described.

(Temperature of Ice after Melting Completely)

With regard to (a) above, ice generated by using the ice making device of the present invention is ice from a liquid that includes an aqueous solution including a solute, and thus the temperature of the solidifying point thereof is lower than the solidifying point of fresh water (water which does not include a solute). For this reason, the ice has a feature that the temperature of the ice after melting completely is lower than 0°C. The "temperature of the ice after melting completely" refers to the temperature of water at the time point at which the entire ice generated by using the ice making device of the present invention melts to water after melting of the ice is started by putting the ice in an environment (for example, at room temperature and atmospheric pressure) at a temperature equal to or higher than the melting point.

The temperature of the ice after melting completely is not particularly limited as long as it is lower than 0°C, and it can be appropriately changed by adjusting the kind and concentration of solute. It is more preferable as the temperature of the ice after melting completely is lower from the viewpoint of a higher cooling capacity, and specifically, the temperature is preferably -1°C or lower (-2°C or lower, - 3°C or lower, -4°C or lower, -5°C or lower,-6°C or lower, -7°C or lower, -8°C or lower, -9°C or lower, -10°C or lower, -11°C or lower, -12°C or lower, -13°C or lower, -14°C or lower, - 15°C or lower, -16°C or lower, -17°C or lower, -18°C or lower, -19°C or lower, -20°C or lower, and the like). Meanwhile, there is also a case in which it is preferable to bring the solidifying point closer to the freezing point of the article to be cooled (for example, in order to prevent damage to fresh plants/animals), and in such a case, it is preferable that the temperature of the ice after melting completely is not too high, and for example, the temperature is preferably -21°C or higher (-20°C or higher, -19°C or higher, -18°C or higher, - 17°C or higher, -16°C or higher, -15°C or higher, -14°C or higher, -13°C or higher, -12°C or higher, -11°C or higher, - 10°C or higher, -9°C or higher, -8°C or higher, -7°C or higher, -6°C or higher, -5°C or higher, -4°C or higher, -3°C or higher, -2°C or higher, -1°C or higher, -0.5°C or higher, and the like).

(Rate of Change of Solute Concentration)

With regard to (b) above, ice generated by using the ice making device of the present invention has a feature that a rate of change of the solute concentration in an aqueous solution to be generated from the ice in the melting process (hereinafter abbreviated as the "rate of change of the solute concentration" in some cases in the present specification) is 30% or less. There is also a case in which ice having a decreased solidifying point is slightly generated even by the conventional techniques, but most of the ice is a mixture of ice from water which does not include a solute and the crystal of the solute and thus it does not have a sufficient cooling capacity. In a case in which a mixture of ice from water which does not include a solute and the crystal of the solute is included in a large amount in this manner, the elution speed of the solute accompanying melting is unstable in the case of putting the ice under the melting conditions, a more amount of the solute elutes as the time point is closer to the time of start of melting, the amount of the solute to elute decreases as the melting proceeds, and the amount of the solute eluted decreases as the time point is closer to the time of completion of melting. In contrast, ice generated by using the ice making device of the present invention is composed of ice from a liquid that includes an aqueous solution including a solute, and it thus has a feature that the change of the elution speed of the solute in the melting process is small. Specifically, the rate of change of the solute concentration of the aqueous solution to be generated from the ice in the melting process is 30%. Incidentally, the "rate of change of the solute concentration of the aqueous solution to be generated from the ice in the melting process" means the proportion of the concentration of the aqueous solution at the time of completion of melting to the concentration of the solute in the aqueous solution to be generated at an arbitrary time point in the melting process. Incidentally, the "solute concentration" means the concentration of the mass of the solute in the aqueous solution.

The rate of change of the solute concentration in ice generated by using the ice making device of the present invention is not particularly limited as long as it is 30% or less, but it means that the purity of the ice from the aqueous solution having a decreased solidifying point is higher, that is, the cooling capacity is higher as the rate of change of the solute concentration is smaller. From this viewpoint, it is preferable that the rate of change of the solute concentration is 25% or less (24% or less, 23% or less, 22% or less, 21% or less, 20% or less, 19% or less, 18% or less, 17% or less, 16% or less, 15% or less, 14% or less, 13% or less, 12% or less, 11% or less, 10% or less, 9% or less, 8% or less, 7% or less, 6% or less, 5% or less, 4% or less, 3% or less, 2% or less, 1% or less, 0.5% or less, and the like). Meanwhile, the rate of change of the solute concentration may be 0.1% or more (0.5% or more, 1% or more, 2% or more, 3% or more, 4% or more, 5% or more, 6% or more, 7% or more, 8% or more, 9% or more, 10% or more, 11% or more, 12% or more, 13% or more, 14% or more, 15% or more, 16% or more, 17% or more, 18% or more, 19% or more, 20% or more, and the like).

(Solute)

The kind of solute to be included in ice generated by using the ice making device of the present invention is not particularly limited as long as it is a solute when water is used as a solvent, and it can be appropriately selected depending on the desired solidifying point, the application of ice to be used, and the like. Examples of the solute may include a solid solute and a liquid solute, and examples of a typical solid solute may include salts (inorganic salts, organic salts, and the like). Particularly, common salt (NaCl) among the salts is preferable since the temperature of solidifying point is not excessively decreased and it is suitable for cooling of fresh plants/animals or portions thereof. In addition, common salt is preferable from the viewpoint of easy procurement as well since it is included in seawater. In addition, examples of the liquid solute may include ethylene glycol. Incidentally, the solute may be included singly or two or more kinds thereof may be included.

The concentration of the solute included in ice generated by using the ice making device of the present invention is not particularly limited, and it can be appropriately selected depending on the kind of solute, the desired solidifying point, the application of ice to be used, and the like. For example, in the case of using common salt as a solute, it is preferable that the concentration of common salt is 0.5% (w/v) or more (1% (w/v) or more, 2% (w/v) or more, 3% (w/v) or more, 4% (w/v) or more, 5% (w/v) or more, 6% (w/v) or more, 7% (w/v) or more, 8% (w/v) or more, 9% (w/v) or more, 10% (w/v) or more, 11% (w/v) or more, 12% (w/v) or more, 13% (w/v) or more, 14% (w/v) or more, 15% (w/v) or more, 16% (w/v) or more, 17% (w/v) or more, 18% (w/v) or more, 19% (w/v) or more, 20% (w/v) or more, and the like) from the viewpoint of further decreasing the solidifying point of the aqueous solution and thus being able to obtain a high cooling capacity. Meanwhile, it is preferable not to excessively decrease the temperature of solidifying point in the case of using ice generated by using the ice making device of the present invention for cooling fresh plants/animals or portions thereof, and it is preferable that the concentration of common salt is 23% (w/v) or less (20% (w/v) or less, 19% (w/v) or less, 18% (w/v) or less, 17% (w/v) or less, 16% (w/v) or less, 15% (w/v) or less, 14% (w/v) or less, 13% (w/v) or less, 12% (w/v) or less, 11% (w/v) or less, 10% (w/v) or less, 9% (w/v) or less, 8% (w/v) or less, 7% (w/v) or less, 6% (w/v) or less, 5% (w/v) or less, 4% (w/v) or less, 3% (w/v) or less, 2% (w/v) or less, 1% (w/v) or less, and the like) from this viewpoint.

Ice generated by using the ice making device of the present invention is suitable for use as a refrigerant for cooling an article to be cold reserved since it has an excellent cooling capacity. Examples of a low-temperature refrigerant for cooling an article to be cold reserved may include an organic solvent to be used as an anti-freezing solution such as ethanol in addition to ice, but the ice has a higher thermal conductivity and a higher specific heat than these anti-freezing solutions. For this reason, the ice having a decreased solidifying point through dissolution of a solute such as ice generated by using the ice making device of the present invention is useful from the viewpoint of having a superior cooling capacity to other refrigerants at lower than 0°C such as an anti-freezing solution as well.

Ice generated by using the ice making device of the present invention may or may not include components other than the solute described above.

In the present invention, the term "ice" refers to one obtained as a liquid that includes an aqueous solution freezes.

In addition, ice generated by using the ice making device of the present invention is sustained in a stable state at a temperature equal to or lower than the solidifying point of fresh water, that is, the ice can be sustained in a non-separating state for a long time. For this reason, for example, in a case in which the liquid constituting ice generated by using the ice making device of the present invention is a liquid which further includes oil in addition to the aqueous solution including a solute described above as will be described later, a state in which the oil is uniform lasts for a long time, that is, a non-separating state can be sustained for a long time.

As described above, the liquid constituting ice generated by using the ice making device of the present invention may be a liquid which further includes oil in addition to the aqueous solution including a solute described above. Examples of such a liquid may include raw milk, industrial waste including water and oil (waste milk and the like). It is preferable that the liquid is raw milk from the viewpoint that the functionality when eating the ice is improved. It is presumed that the reason for that the functionality is improved in this manner is because the oil (fat) included in the raw milk is confined in the ice. Incidentally, ice generated by using the ice making device of the present invention may be constituted only by one obtained by freezing the aqueous solution including a solute described above.

In a case in which the liquid constituting ice generated by using the ice making device of the present invention further includes oil, the ratio between water and oil in the liquid is not particularly limited, and for example, it may be appropriately selected in a range of 1 : 99 to 99 : 1 (10 : 90 to 90 : 10, 20 : 80 to 80 : 20, 30 : 80 to 80 : 30, 40 to 60 : 40 to 60, and the like).

In addition, ice generated by using the ice making device of the present invention may be ice from an aqueous solution including two or more kinds of solutes having different degrees of solidifying point depression. In this case, ice generated by using the ice making device of the present invention may be a mixture of ice from an aqueous solution including one solute and ice from an aqueous solution including the other solute. In such a case, it is possible to delay melting of ice from an aqueous solution including ethylene glycol, for example, by adding ice from an aqueous solution including common salt as a solute having a degree of solidifying point depression different from that of ethylene glycol to the ice from an aqueous solution including ethylene glycol as a solute. Alternatively, ice generated by using the ice making device of the present invention may be ice from an aqueous solution prepared by dissolving two or more kinds of solutes in the same aqueous solution. In addition, to concurrently use two or more kinds of solutes having different degrees of solidifying point depression is also useful to decrease the melting point of ice from an aqueous solution including a solute to be the target. For example, in the case of using common salt as a solute, it is possible to decrease the melting point of ice from saline solution by concurrently using a solute (ethylene glycol, calcium chloride, or the like) which has a superior capacity to decrease the melting point to common salt, and for example, it is possible to realize a temperature in the vicinity of -30°C, which cannot be realized only by ice from saline solution. The ratio of two or more kinds of solutes having different degrees of solidifying point depression can be appropriately changed depending on the purpose.

(Refrigerant for Cooling Article to be Cold Reserved)

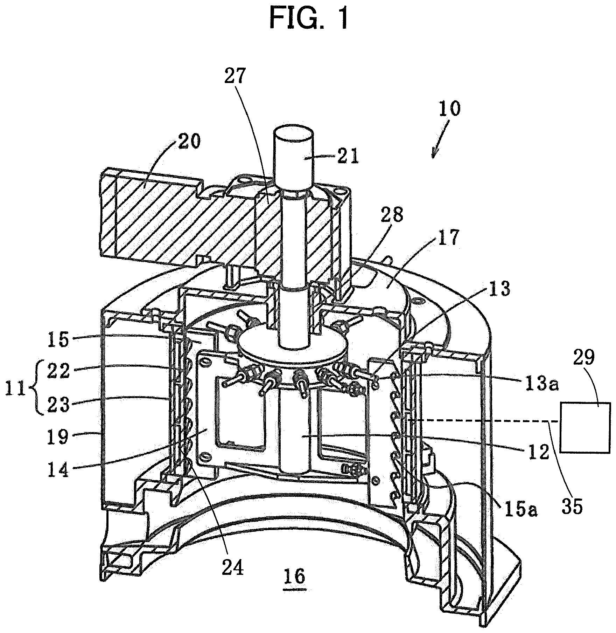

Ice generated by using the ice making device of the present invention can be used as a refrigerant for cooling an article to be cold reserved. Ice generated by using the ice making device of the present invention is suitable as a refrigerant for cooling an article to be cold reserved since it has an excellent cooling capacity as described above. Incidentally, in order to prevent confusion between the refrigerant for cooling an article to be cold reserved and the refrigerant for cooling the inner cylinder 22 (see Fig. 1), the refrigerant for cooling an article to be cold reserved is hereinafter referred to as "ice slurry". The ice slurry is a mixture of ice generated by using the ice making device of the present invention and a liquid that includes an aqueous solution.

The ice slurry including ice generated by using the ice making device of the present invention may include components other than the ice, and for example, it may be constituted by a mixture of ice and water by including water in addition to the ice. For example, in the case of further including water including the same solute as the solute included in the ice, it is preferable that the concentration of the solute in the ice and the concentration of the solute in the water are close to each other. The reason is as follows.

In a case in which the solute concentration in the ice is higher than the solute concentration in the water, the temperature of the ice is lower than the saturated freezing point of the water and thus the moisture freezes immediately after the water having a lower solute concentration is mixed with the ice. On the other hand, in a case in which the solute concentration in the ice is lower than the solute concentration in the water, the saturated freezing point of the water is lower than the saturated freezing point of the ice and thus the ice melts and the temperature of the ice slurry composed of the mixture of ice and water decreases. In other words, as described above, it is preferable to set the solute concentrations in ice and water to be mixed to be about the same in order not to change the state of the mixture of ice and water (state of ice slurry). In addition, in a case in which the ice slurry is in the state of a mixture of ice and water, the water may be one generated as the ice melts or one separately prepared, but the water is preferably one generated as the ice melts.

Specifically, in the case of constituting the ice slurry including ice generated by using the ice making device of the present invention by a mixture of ice and water, the ratio of the concentration of the solute in the ice to the concentration of the solute in the water is more preferably from 75 : 25 to 20 : 80, still more preferably from 70 : 30 to 30 : 70, yet more preferably from 60 : 40 to 40 : 60, yet still more preferably from 55 : 45 to 45 : 55, particularly preferably from 52 : 48 to 48 : 52, and most preferably 50 : 50. Particularly in the case of using common salt as a solute, it is preferable that the ratio of the concentration of the solute in ice to the concentration of the solute in water is in the above range.

The water to be the raw material of ice generated by using the ice making device of the present invention is not particularly limited, but it is preferable that the ice is ice from seawater, water prepared by adding a salt to seawater, or diluted water of seawater in the case of using a common salt as a solute. Seawater, water prepared by adding a salt to seawater, or diluted water of seawater is easily procured, and this makes it possible to cut down the cost.

The ice slurry including ice generated by using the ice making device of the present invention may or may not further include a solid having a higher thermal conductivity than the ice generated by using the ice making device of the present invention, but it is preferable to further include the solid. It is possible to achieve cooling of a target of cooling in a short time by utilizing a solid having a high thermal conductivity, but in this case, the solid itself also loses cold energy in a short time and the temperature thereof is likely to increase and the solid is thus unsuitable for long-time cooling. Meanwhile, it is suitable not to utilize a solid having a high thermal conductivity for long-time cooling but it is unsuitable not to utilize the solid for short-time cooling of a target of cooling. However, ice generated by using the ice making device of the present invention has a high cooling capacity as described above and is thus useful from the viewpoint that long-time cooling is also possible while obtaining a short-time cooling capacity by the solid having a high thermal conductivity. Examples of the solid having a higher thermal conductivity than ice generated by using the ice making device of the present invention may include metals (aluminum, silver, copper, gold, duralumin, antimony, cadmium, zinc, tin, bismuth, tungsten, titanium, iron, lead, nickel, platinum, magnesium, molybdenum, zirconium, beryllium, indium, niobium, chromium, cobalt, iridium, and palladium), alloys (steel (carbon steel, chromium steel, nickel steel, chromium nickel steel, silicon steel, tungsten steel, manganese steel, and the like), nickel chrome alloy, aluminum bronze, gunmetal, brass, manganin, nickel silver, constantan, solder, alumel, chromel, monel metal, platinum iridium, and the like), silicon, carbon, ceramics (alumina ceramics, forsterite ceramics, steatite ceramics, and the like), marble, brick (magnesia brick, Corhart brick, and the like), which have a higher thermal conductivity than the ice of the present invention. In addition, as the solid having a higher thermal conductivity than ice generated by using the ice making device of the present invention, a solid having a thermal conductivity of 2.3 W/mK or more (3 W/mK or more, 5 W/mK or more, 8 W/mK or more, or the like) is preferable, a solid having a thermal conductivity of 10 W/mK or more (20 W/mK or more, 30 W/mK or more, 40 W/mK or more, or the like) is more preferable, a solid having a thermal conductivity of 50 W/mK or more (60 W/mK or more, 75 W/mK or more, 90 W/mK or more, or the like) is still more preferable, a solid having a thermal conductivity of 100 W/mK or more (125 W/mK or more, 150 W/mK or more, 175 W/mK or more, or the like) is yet more preferable, a solid having a thermal conductivity of 200 W/mK or more (250 W/mK or more, 300 W/mK or more, 350 W/mK or more, or the like) is still yet more preferable, a solid having a thermal conductivity of 200 W/mK or more is still yet more preferable, and a solid having a thermal conductivity of 400 W/mK or more (410 W/mK or more or the like) is particularly preferable.

In a case in which the ice slurry including ice generated by using the ice making device of the present invention includes a solid having a higher thermal conductivity than the ice of the present invention described above, the ice slurry is suitable for long-time cooling even when it includes a large amount of solid as described above, and for example, the mass of the solid having a higher thermal conductivity than ice generated by using the ice making device of the present invention/the mass of ice generated by using the ice making device of the present invention included in the ice slurry (or the total mass of the ice of the present invention included in the ice slurry and the liquid that includes an aqueous solution) may be 1/100000 or more (1/50000 or more, 1/10000 or more, 1/5000 or more, 1/1000 or more, 1/500 or more, 1/100 or more, 1/50 or more, 1/10 or more, 1/5 or more, 1/4 or more, 1/3 or more, 1/2 or more, and the like).

The solid included in the ice slurry including ice generated by using the ice making device of the present invention may have any shape, but it preferably has a particulate shape. In addition, the solid may be included in the form of being included inside ice generated by using the ice making device of the present invention or in the form of being included outside the ice, but the cooling capacity is higher when the solid is included in the form of being included outside the ice since the solid is likely to come into direct contact with the target of cooling. For this reason, it is preferable that the solid is included in the form of being included outside the ice. In addition, in a case in which the ice slurry including ice generated by using the ice making device of the present invention includes the solid described above, ice may be generated by using the ice making device of the present invention to be described later and then mixed with the solid or ice may be generated in a state in which the solid is mixed with water to be a raw material of the ice in advance by using the ice making device of the present invention.

Hereinafter, a flake ice production device 10 according to an embodiment of the ice making device of the present invention and an ice making system 60 including the flake ice production device 10 according to an embodiment of the ice making device of the present invention will be described with reference to the drawings.

[Flake Ice Production Device]

Fig. 1 is an image view including a partial cross-sectional perspective view which illustrates the outline of the flake ice production device 10 according to an embodiment of the ice making device of the present invention.

It is impossible to generate the same ice as ice generated by using the flake ice production device 10 even when a liquid that includes an aqueous solution and is in a state of being accumulated in a container is cooled from the outside. It is considered that this is because the cooling speed is not sufficient. However, according to the flake ice production device 10, quick cooling which has not been realized in the prior art is possible as the misty aqueous solution comes into direct contact with the wall surface kept at a temperature equal to or lower than the solidifying point of the aqueous solution through spraying of a liquid (hereinafter referred to as "brine") that includes an aqueous solution including a solute. It is considered that it is possible to generate ice which satisfies the conditions (a) and (b) and has a high cooling capacity by this.

Examples of the wall surface may include a wall surface of the inner wall 22 of a cylindrical structure such as the drum 11 to be described later, but the wall surface is not particularly limited as long as it is a wall surface which can be kept at a temperature equal to or lower than the solidifying point of the aqueous solution. The temperature of the wall surface is not particularly limited as long as it is kept at a temperature equal to or lower than the solidifying point of the aqueous solution, but it is preferable that the temperature is kept at a temperature lower by 1°C or greater (a temperature lower by 2°C or greater, a temperature lower by 3°C or greater, a temperature lower by 4°C or greater, a temperature lower by 5°C or greater, a temperature lower by 6°C or greater, a temperature lower by 7°C or greater, a temperature lower by 8°C or greater, a temperature lower by 9°C or greater, a temperature lower by 10°C or greater, a temperature lower by 11°C or greater, a temperature lower by 12°C or greater, a temperature lower by 13°C or greater, a temperature lower by 14°C or greater, a temperature lower by 15°C or greater, a temperature lower by 16°C or greater, a temperature lower by 17°C or greater, a temperature lower by 18°C or greater, a temperature lower by 19°C or greater, a temperature lower by 20°C or greater, a temperature lower by 21°C or greater, a temperature lower by 22°C or greater, a temperature lower by 23°C or greater, a temperature lower by 24°C or greater, a temperature lower by 25°C or greater, and the like) than the solidifying point of the aqueous solution from the viewpoint of being able to produce ice which satisfies the conditions (a) and (b) and has a high purity of ice.

The spraying method is not particularly limited, but the liquid can be sprayed, for example, by being sprayed through a spraying means having a spraying hole 13a as the spraying unit 13 to be described later. In this case, the water pressure at the time of spraying may be, for example, 0.001 MPa or more (0.002 MPa or more, 0.005 MPa or more, 0.01 MPa or more, 0.05 MPa or more, 0.1 MPa or more, 0.2 MPa or more, and the like) or 1 MPa or less (0.8 MPa or less, 0.7 MPa or less, 0.6 MPa or less, 0.5 MPa or less, 0.3 MPa or less, 0.1 MPa or less, 0.05 MPa or less, 0.01 MPa or less, and the like).

In addition, spraying of the liquid may be conducted through continuous spraying in which a rotating means such as a rotatable rotary shaft 12 is provided on the central axis of the vertical drum 11 to be described later and spraying is conducted while rotating the rotating means.

(Collecting Step)

The flake ice production device 10 has a step of collecting the ice generated on the wall surface after the ice generating step described above.

The collecting method is not particularly limited, and for example, the ice on the wall surface may be scraped or stripped off using a means such as the blade 15 to be described later and the ice which has fallen may be collected.

In addition, heat by ice making is generated when ice is generated, but there is a possibility that actual melting completion temperature is affected as the ice exposed to this heat by ice making. It is considered that the melting completion temperature is affected not only by the kind and concentration of solute but also by the heat by ice making in this manner. For this reason, the actual melting completion temperature can be adjusted by adjusting the quantity of heat by ice making remaining on the ice. The adjustment of heat by ice making can be conducted by adjusting the holding time of the ice on the wall surface in the collecting step of the ice.

As illustrated in Fig. 1, the flake ice production device 10 includes a drum 11, a rotary shaft 12, a spraying unit 13, a stripping unit 14, a blade 15, a flake ice discharge port 16, an upper bearing member 17, a heat insulating protective cover 19, a geared motor 20, a rotary joint 21, a refrigerant clearance 24, a bush 28, a refrigerant supply unit 29, and a rotation control unit 27. The drum 11 is constituted by an inner cylinder 22, an outer cylinder 23 surrounding the inner cylinder 22, and the refrigerant clearance 24 to be formed between the inner cylinder 22 and the outer cylinder 23. In addition, the outer peripheral surface of the drum 11 is covered with the cylindrical heat insulating protective cover 19.

The inner cylinder 22 has a wall surface, the brine adhered to the wall surface is frozen as the wall surface is cooled, and ice is thus generated. Here, the flake ice production device 10 is designed such that the following formula (1) (where f means a function) is satisfied when Y represents the ice making speed indicating the amount of ice generated on the wall surface of the inner cylinder 22 per unit time and x1 represents the thermal conductivity of the member constituting the wall surface of the inner cylinder 22.

$$Y = f(x1) \qquad (1)$$

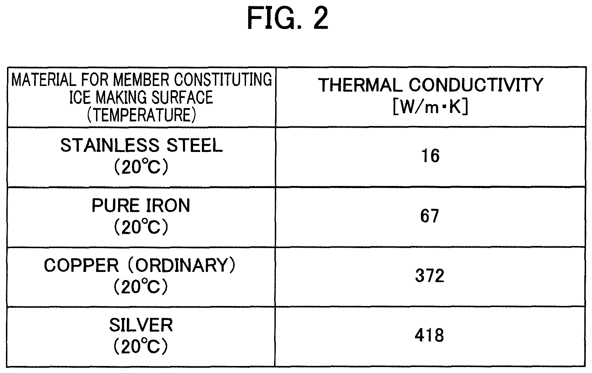

In other words, the temperature of the refrigerant for cooling the wall surface of the inner cylinder 22 is more rapidly transmitted to the brine as the thermal conductivity of the wall surface of the inner cylinder 22 to which the brine adheres is higher, and a more amount of ice is thus generated in a shorter time. For this reason, it is possible to increase the ice making speed by adopting a member having a higher thermal conductivity as the member constituting the inner cylinder 22. In contrast, it is possible to decrease the ice making speed by adopting a member having a lower thermal conductivity as the member constituting the inner cylinder 22. In the present embodiment, as the member constituting the wall surface of the inner cylinder 22, a member having a higher thermal conductivity than that of stainless steel or iron is adopted, and more specifically, a member (for example, copper) having a thermal conductivity of 70 W/mK or more at 20°C is adopted. Hence, the flake ice production device 10 can generate a more amount of ice in a shorter time as compared to a case of adopting stainless steel or iron as the member constituting the wall surface of the inner cylinder 22. Generally, in the case of attempting to produce a large amount of ice, it is required to increase the surface area of the wall surface of the inner cylinder 22 in order to efficiently produce ice in a shorter time, but the production speed of ice increases as the wall surface of the inner cylinder 22 is constituted by a member having a higher thermal conductivity, it is thus not required to increase the wall surface of the inner cylinder 22, and as a result, it is also possible to produce ice in a relatively narrow space. From this viewpoint, it is preferable to adopt a member having a high thermal conductivity as the member constituting the wall surface of the inner cylinder 22, and more specifically, a member having a thermal conductivity of 100 W/mK or more at 20°C is more preferable, a member having a thermal conductivity of 150 W/mK or more at 20°C is still more preferable, a member having a thermal conductivity of 200 W/mK or more at 20°C is yet more preferable, a member having a thermal conductivity of 250 W/mK or more at 20°C is still yet more preferable, and a member having a thermal conductivity of 300 W/mK or more at 20°C is particularly preferable. The upper limit of the thermal conductivity is not particularly limited, but for example, the thermal conductivity at 20°C may be 1000 W/mK or less (900 W/mK or less, 800 W/mK or less, 700 W/mK or less, 600 W/mK or less, 500 W/mK or less, 400 W/mK or less, and the like). Specific examples of the member constituting the wall surface of the inner cylinder 22 may include zinc, aluminum, duralumin, gold, silver, tungsten, copper, aluminum bronze, 73 brass, navel brass, nickel (99.9%), molybdenum, palladium, and silicon. In addition, the flake ice production device of the present invention is suitable for the production of ice in a relatively narrow space as described above, and for example, it is suitable for the production of ice at a place which only has limited space such as the interior of transportation equipment (for example, a vehicle (truck or the like) and a ship). Incidentally, the relationship between the member constituting the wall surface of the inner cylinder 22 and the thermal conductivity will be described later with reference to a specific example of the member illustrated in Fig. 2.

In addition, the flake ice production device 10 is designed such that the following formula (2) is satisfied when Y represents the ice making speed and x2 represents the area of the part onto which the brine possibly adheres of the wall surface of the inner cylinder 22.

$$Y = f(x2) \quad (2)$$

In other words, the amount of brine which can adhere to the wall surface of the inner cylinder 22 increases as much as the area of the part onto which the brine can adhere of the wall surface of the inner cylinder 22 is increased. Hence, the amount of ice generated on the wall surface of the inner cylinder 22 also increases as a result. In contrast, the amount of brine which can adhere to the wall surface of the inner cylinder 22 decreases as much as the area of the part onto which the brine can adhere of the wall surface of the inner cylinder 22 is decreased. Hence, the amount of ice generated on the wall surface of the inner cylinder 22 also decreases as a result. The ice making speed is adjusted by adjusting the area of the part onto which the brine can adhere of the wall surface of the inner cylinder 22 in this manner.

The material for the outer cylinder 23 is not particularly limited. Incidentally, steel is adopted in the present embodiment. A refrigerant is supplied from the refrigerant supply unit 29 to the refrigerant clearance 24 via a refrigerant tube 35. The wall surface of the inner cylinder 22 is cooled by this.

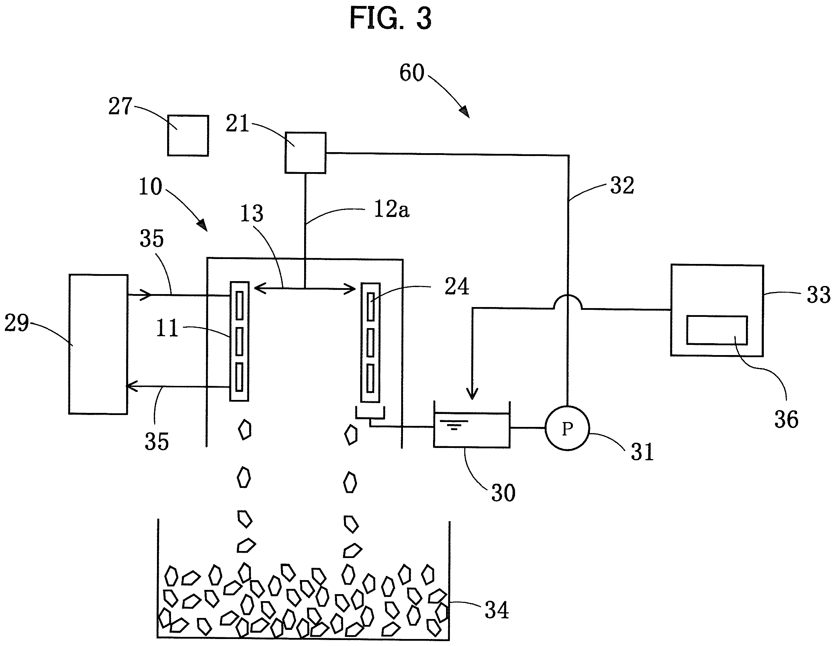

The rotary shaft 12 is disposed on the central axis of the drum 11 and rotates around the material axis by taking the central axis as the axis and using the geared motor 20 installed above the upper bearing member 17 as a power source. Incidentally, the rotational speed of the geared motor 20 is controlled by the rotation control unit 27 to be described later. In addition, the rotary joint 21 is attached to the top portion of the rotary shaft 12. A vertical hole 12a which extends in the material axis direction and communicates with each pipe 13 is formed on the rotary joint 21 and the upper portion of the rotary shaft 12 (see Fig. 3).

The spraying unit 13 is constituted by a plurality of pipes having a spraying hole 13a for spraying the brine toward the wall surface of the inner cylinder 22 at the tip portion and rotates together with the rotary shaft 12. The brine sprayed through the spraying hole 13a adheres to the wall surface of the inner cylinder 22 cooled with the refrigerant, and is quickly frozen without being provided with time to separate therefrom. The plurality of pipes constituting the spraying unit 13 radially extend from the rotary shaft 12 in the radial direction of the drum 11. The installation height of each pipe is not particularly limited, but in the present embodiment, each pipe is installed at the upper position of the height of the inner cylinder 22 of the drum 11. Incidentally, a spray nozzle or the like may be adopted instead of the pipe.

In addition, in the flake ice production device 10, the brine can also adhere to the wall surface of the inner cylinder 22 through gravity flow without adopting a method through spraying as described above. In this case, the volume of brine adhering to the wall surface of the inner cylinder 22 is greater as compared to a case in which the brine adheres to the wall surface of the inner cylinder 22 through spraying. For this reason, the ice generated by the gravity flow of the brine is hardly affected by the temperature in the air inside the drum 11, which is higher than the temperature of the wall surface of the inner cylinder 22, and it thus has an advantageous property of more hardly melting than the ice generated through spraying of the brine.

The stripping unit 14 is constituted by a plurality of arms having the blade 15 which strips off the ice generated on the wall surface of the inner cylinder 22 mounted on the tip portion. Incidentally, the stripping unit 14 extends in the radial direction of the drum 11 and rotates together with the rotary shaft 12. The plurality of arms constituting the stripping unit 14 are mounted so as to be symmetrical to the rotary shaft 12. The number of arms is not particularly limited, but in the present embodiment, the number of arms is set to two. The size and the material of the blade 15 mounted on the tip portion of each arm are not particularly limited as long as the blade 15 can strip off the ice generated on the wall surface of the inner cylinder 22. For example, ice may be scraped off or stripped off by the tip of the blade. Incidentally, in the present embodiment, the blade 15 is made of a stainless steel plate material having a length substantially equal to the total length (total height) of the inner cylinder 22, and a plurality of serrations 15a are formed on the end face facing the inner cylinder 22. Flake ice is obtained as the ice generated on the wall surface of the inner cylinder 22 is stripped off by the blade 15. The flake ice falls through the flake ice discharge port 16. The flake ice which has fallen through the flake ice discharge port 16 is stored in a flake ice storage tank 34 (see Fig. 3) disposed immediately below the flake ice production device 10.

The upper bearing member 17 has a shape formed as a pot is inverted and seals the upper surface of the drum 11. The bush 24 for supporting the rotary shaft 12 is fitted at the central portion of the upper bearing member 17. Incidentally, the rotary shaft 12 is supported only by the upper bearing member 17, and the lower end portion of the rotary shaft 12 is not pivotally supported. In other words, there is no obstacle at the lower place of the drum 11 when the flake ice stripped off by the blade 15 falls, and thus the lower surface of the drum 11 serves as a flake ice discharge port 16 for discharging the flake ice.

The refrigerant supply unit 29 supplies a refrigerant for cooling the wall surface of the inner cylinder 22 to the refrigerant clearance 24 via the refrigerant tube 35. Incidentally, the refrigerant to be supplied by the refrigerant supply unit 29 is not particularly limited as long as it cools the wall surface of the inner cylinder 22. Specifically, for example, LNG (liquefied natural gas) can be adopted as the refrigerant.

Conventionally, imported LNG is stored in the LNG storage tank in a liquid state at -160°C, and this LNG at -160°C is vaporized until it reaches room temperature, subjected to calorific value adjustment and odorization, and supplied as city gas or for GT power generation. For example, as a method of effectively utilizing the exhaust cold heat of LNG, a method in which the exhaust cold heat until the LNG at -160°C reaches room temperature is utilized for the production of liquid oxygen and liquid nitrogen, freezing storage warehouse, cryogenic power generation, and the vaporization of LNG (ORV type) using seawater as the heat source is taken in the LNG terminal.

In the case of utilizing the exhaust cold heat of LNG in the above-mentioned applications, there are the following merits as compared to the conventional cooling method by electric power or engine drive. In other words, there are merits that (1) the electric power required can be decreased, (2) the cold energy of LNG unutilized can be effectively utilized, (3) a large-sized generator is not required, (4) the pollution factor decreases, (5) the cost is cut down, and the like. On the other hand, there have been also the following demerits in the case of trying to utilize the exhaust cold heat of LNG. In other words, the utilization of exhaust cold heat of LNG has been usually limited to continuous utilization at the place in the vicinity of the LNG terminal. This is because LNG is accompanied by the danger of combustion at the time of transportation. In other words, in the case of utilizing the exhaust cold heat of LNG, the facility to receive the supply of exhaust cold heat of LNG has been required to receive the supply of LNG from the LNG terminal through the tube and to return the gas to the LNG terminal after the exhaust cold heat of LNG is utilized. For this reason, it has been difficult to make it possible to transport LNG itself to a remote place and to utilize the exhaust cold heat of LNG batchwise at that place. In addition, fixed facilities are required in order to continuously utilize the exhaust cold heat of LNG at the place in the vicinity of the LNG terminal, and thus there has been also a demerit that only a long-term and stable project can cope with this. Furthermore, there has been also a demerit that direct heat exchange between LNG and the article to be cooled is accompanied by a danger.

However, the above-described demerits are eliminated in the case of utilizing LNG as the refrigerant of the flake ice production device 10. In other words, it is possible to produce flake ice having an extremely low temperature by utilizing LNG as the refrigerant of the flake ice production device 10. Hence, it is possible to utilize the exhaust cold heat of LNG batchwise at a remote place by transporting the produced flake ice to the remote place but not transporting the LNG itself to the remote place. In addition, the flake ice production device 10 has mobility since it is not required to be fixed at a specific place and can be mounted on a moving body such as a vehicle, a ship, or an aircraft. Furthermore, direct heat exchange between LNG and the article to be cooled, accompanied by danger, is not conducted since there is an intermediate refrigerant called flake ice.

In addition, it is possible to produce flake ice which has an extremely low temperature and is generated by instantaneously freezing brine having a freezing point of about up to -150 degrees by utilizing LNG at -160 degrees as the refrigerant of the flake ice production device 10. In other words, it is possible to produce flake ice at -21.2°C in a saturated state in a case in which the brine is salt water (aqueous solution of sodium chloride) and it is possible to produce flake ice at -26.27°C in a saturated state in a case in which the brine is an aqueous solution of magnesium chloride, but even a substance which has a lower freezing point than ethylene glycol salt water and an aqueous solution of magnesium chloride and has been hitherto not able to be utilized in brine as an "anti-freezing solution" can also be utilized as flake ice by being instantaneously frozen. Specifically, it is also possible to produce flake ice, for example, using ethylene glycol as brine.

In other words, it is possible to produce flake ice having an extremely low temperature of about -150°C by utilizing LNG at -160 degrees of a refrigerant having an extremely low temperature as the refrigerant of the flake ice production device 10. That is, the cold reserving temperature required is individually different depending on the kind of article to be cold reserved, and for example, -1°C is suitable for an article to be cold reserved and -150°C is suitable for another article to be cold reserved. In brief, it is possible to easily produce flake ice matched to the widely required cold reserving temperature by utilizing LNG at -160 degrees of a refrigerant having an extremely low temperature when cooling the wall surface of the inner cylinder 22. The flake ice production device 10 not only can supply cold heat as a substitute for the conventional freezing machine but also can increase the energy efficiency by utilizing the exhaust cold heat of LNG in this manner. In other words, it is also possible to construct a cogeneration system.

In addition, the flake ice production device 10 is designed such that the following formula (3) is satisfied when Y represents the ice making speed and x3 represents the temperature of the refrigerant to be supplied to the refrigerant clearance 24.

$$Y = f(x3) \quad (3)$$

In other words, the flake ice production device 10 is designed such that the ice making speed changes depending on the temperature of the refrigerant to be supplied to the refrigerant clearance 24 by the refrigerant supply unit 29. In other words, the flake ice production device 10 can more rapidly freeze the brine adhered to the wall surface of the inner cylinder 22 as the temperature of the wall surface of the inner cylinder 22 is lower. In brief, the flake ice production device 10 can generate a more amount of ice in a shorter time as the temperature of the refrigerant to be supplied to the refrigerant clearance 24 is lower. Specifically, the temperature of the wall surface of the inner cylinder 22 drastically decreases, for example, in the case of supplying LNG at -160°C to the refrigerant clearance 24. Hence, the flake ice production device 10 can generate a large amount of ice at about up to -150°C in a shorter time.

In the present embodiment, the refrigerant to be supplied to the refrigerant clearance 24 can be circulated between the refrigerant clearance 24 and the refrigerant supply unit 29 via the refrigerant tube 35. This makes it possible to maintain the refrigerant supplied to the refrigerant clearance 24 in a state of having a high cooling function. The rotation control unit 27 adjusts the rotational speed of the spraying unit 13 and the stripping unit 14 which rotate together with the rotary shaft 12 by adjusting the rotational speed of the geared motor 20. Incidentally, the method by which the rotation control unit 27 controls the rotational speed is not particularly limited. Specifically, for example, a control method using an inverter may be adopted.

Fig. 2 is a view illustrating the thermal conductivity of every member to be used for the ice making surface (for example, the wall surface of the inner cylinder 22 in Fig. 1).

As illustrated in Fig. 2, members constituting the ice making surface have different thermal conductivities. For this reason, the ice making speed varies depending on the member to be adopted for the ice making surface. Specifically, for example, the thermal conductivity (W/m□K) of stainless steel is 16 when the temperature is 20°C. In addition, the thermal conductivity (W/m□K) of pure iron is 67 when the temperature is 20°C and this is higher than that of stainless steel. In addition, the thermal conductivity (W/m□K) of copper (ordinary) is 372 when the temperature is 20°C and this is even higher than that of pure iron. In addition, the thermal conductivity (W/m□K) of silver is 418 when the temperature is 20°C and this is even higher than that of copper (ordinary). In other words, the thermal conductivity of the member for the ice making surface exemplified in Fig. 2 is higher in the order of silver > copper (ordinary) > pure iron > stainless steel under the same temperature condition. Hence, the ice making speed also is higher in the order of silver > copper (ordinary) > pure iron > stainless steel.

Specifically, for example, in a case in which the wall surface (ice making surface) of the inner cylinder 22 is constituted by copper, it is possible to increase the ice making speed by changing the wall surface of the inner cylinder 22 from copper to silver. On the other hand, it is possible to slow down the ice making speed by changing the wall surface of the inner cylinder 22 from copper to pure iron or stainless steel. It is possible to adjust the ice making speed of the flake ice production device 10 by arbitrarily changing the member constituting the wall surface of the inner cylinder 22 in this manner.

At this time, a member having a high thermal conductivity such as silver or copper is selected as a member constituting the wall surface of the inner cylinder 22 and a refrigerant having an extremely low temperature such as LNG is selected as a refrigerant for cooling the wall surface of the inner cylinder 22 in some cases. In such a case, a huge amount of cold energy to be supplied from a refrigerant having an extremely low temperature is efficiently transmitted to the brine by the member having a high thermal conductivity and thus more efficient ice generation can be realized.

[Flake Ice Production System]

Fig. 3 is an image view illustrating the outline of the entire flake ice production system 60 including the flake ice production device 10 in Fig. 1.

The flake ice production system 60 includes the flake ice production device 10, a brine storage tank 30, a pump 31, a brine tube 32, a brine tank 33, the flake ice storage tank 34, the refrigerant tube 35, and a freezing point adjusting unit 36. The brine storage tank 30 stores brine to be a raw material of flake ice. The brine stored in the brine storage tank 30 is fed to the rotary joint 21 via the brine tube 32 by running the pump 31 and becomes flake ice by the flake ice production device 10. In other words, the brine fed to the rotary joint 21 is fed to the vertical hole 12a formed on the rotary joint 21 and the rotary shaft 12 and is fed from the vertical hole 12a to each pipe constituting the spraying unit 13.

The brine tank 33 supplies brine to the brine storage tank 30 in a case in which the brine in the brine storage tank 30 has decreased. Incidentally, the brine which has not been frozen on the wall surface of the inner cylinder 22 but has flowed down is stored in the brine storage tank 30 and is again fed to the rotary joint 21 via the brine tube 32 by running the pump 31. The flake ice storage tank 34 is disposed immediately below the flake ice production device 10 and stores flake ice which has fallen through the flake ice discharge port 16 of the flake ice production device 10.

The freezing point adjusting unit 36 adjusts the freezing point of the brine to be supplied to the brine storage tank 30 from the brine tank 33. For example, the freezing point of the salt water varies depending on the concentration in a case in which the brine is salt water, and thus the freezing point adjusting unit 36 adjusts the concentration in the salt water stored in the brine storage tank 30. Incidentally, the method of adjusting the freezing point of brine is not particularly limited to this. For example, the following method can also be adopted. In other words, a plurality of brine storage tanks 30 are provided and plural kinds of brine having different freezing points are stored in each of the several brine storage tanks 30. Thereafter, the brine freezing point adjusting unit 37 selects a predetermined kind of brine based on the temperature of the flake ice to be demanded (for example, a cold reserving temperature demanded for a conveyed article to be conveyed by the flake ice) and supplies the brine to the flake ice production device 10. It is possible to adjust the temperature of the flake ice to be produced by adjusting the freezing point of brine in this manner.

Next, the operation of the flake ice production system 60 which includes the flake ice production device 10 and has the above-described configuration will be described on the assumption that the brine is salt water. First, the refrigerant supply unit 29 supplies the refrigerant to the refrigerant clearance 24 and sets the temperature of the wall surface of the inner cylinder 22 to be lower than the freezing point of salt water by about -10°C.

This makes it possible to freeze the salt water adhered to the wall surface of the inner cylinder 22. At this time, the ice making speed of the flake ice production device 10 is adjusted depending on the thermal conductivity of the member to be adopted as the wall surface of the inner cylinder 22. In addition, the ice making speed of the flake ice production device 10 is adjusted depending on the area of the part onto which the brine possibly adheres of the wall surface of the inner cylinder 22. In addition, the ice making speed of the flake ice production device 10 is adjusted depending on the temperature of the refrigerant to be supplied by the refrigerant supply unit 29.

The rotation control unit 27 drives the geared motor 20 to rotate the rotary shaft 12 around the material axis when the wall surface of the inner cylinder 22 is cooled. The pump 31 supplies salt water, which is brine, from the brine storage tank 30 to the rotary shaft 12 via the rotary joint 21 when the rotary shaft 12 rotates. The spraying unit 13 rotating together with the rotary shaft 12 sprays the salt water toward the wall surface of the inner cylinder 22 when the salt water is supplied into the rotary shaft 12. The salt water sprayed through the spraying unit 13 is instantly frozen when coming into contact with the wall surface of the inner cylinder 22 and ice is generated. Incidentally, in a case in which the brine adheres to the wall surface of the inner cylinder 22 through gravity flow, the volume of brine to adhere to the wall surface of the inner cylinder 22 is larger as compared to a case in which the brine adheres to the wall surface through spraying, and thus the volume of ice to be generated also increases. Hence, it is possible to generate ice which hardly melts on the wall surface of the inner cylinder 22. At this time, the rotation control unit 27 controls the rotational speed of the rotary shaft 12 to from 2 to 4 rpm. Incidentally, in a case in which a spray nozzle is used as a constituent of the spraying unit 13 instead of a pipe, the rotation control unit 27 controls the rotational speed of the rotary shaft 12 to from 10 to 15 rpm. The ice generated on the wall surface of the inner cylinder 22 is stripped off by the stripping unit 14 which rotates together with the rotary shaft 12. The ice stripped off by the stripping unit 14 falls through the discharge port 16 as flake ice. The flake ice which has fallen through the discharge port 16 is stored in the flake ice storage tank 34 disposed immediately below the flake ice production device 10. As described above, the salt water which has not converted to ice but has flowed down the wall surface of the inner cylinder 22 is stored in the brine storage tank 30 and is again fed to the rotary joint 21 via the brine tube 32 by running the pump 31. Incidentally, the brine tank 33 supplies the salt water stored in the brine tank 33 itself to the brine storage tank 30 in a case in which the salt water in the brine storage tank 30 has decreased.

Here, the temperature of the flake ice produced by the flake ice production device 10 can be changed as the rotation control unit 27 changes the rotational speed of the geared motor 20. For example, it is assumed that salt water is adopted as brine. In this case, it has been hitherto considered that the freezing point at which the salt water freezes depends only on the solute concentration in the salt water. For example, it has been hitherto considered that the salt water freezes at -1.2°C in any case when the solute concentration is 0.8%. However, the applicant of the present invention have found out that the temperature of flake ice to be produced from salt water at the same concentration changes depending on the rotational speed and particularly the temperature decreases as the rotational speed decreases when salt water is adopted as brine and the rotational speed of the rotary shaft 12 is changed by using the flake ice production device 10 of the present embodiment. The reason for this is because the state of flake ice exposed to the heat by ice making is maintained until the flake ice completely melts. This makes it possible to adjust the temperature of flake ice while fixing the concentration of brine to a desired value according to the targets of refrigeration and freezing.

[Ice Slurry Production Method]

Next, an example of a method of producing an ice slurry using the above-described brine and flake ice as materials will be described. With regard to the ice slurry, it is possible to produce an ice slurry which has the cold reserving temperature and cold reserving time required by using plural kinds of brine previously prepared as materials. Incidentally, the method is described on the assumption that the brine is salt water and the article to be cold reserved is fresh marine products and also the fresh marine products, which are the article to be cold reserved, are instantaneously frozen by being directly placed in the ice slurry.

The solute concentration in the salt water, which is a raw material of the ice slurry, is set to be greatly higher as compared to a conventional solute concentration in order to instantaneously freeze fresh marine products. The theoretical saturated freezing point of salt water having a solute concentration of 13.6% is -9.8°C and the theoretical saturated freezing point of salt water having a solute concentration of 23.1% is -21.2°C. The freezing speed of fresh marine products by the produced ice slurry slows down in a case in which the solute concentration in salt water is less than 13.6%. On the other hand, the salt precipitates as a crystal and thus the saturated freezing point of salt water increases in a case in which the solute concentration in salt water exceeds 23.1%. Incidentally, in a case in which fresh marine products are directly placed in the ice slurry, the surface of the fresh marine products instantaneously freezes and is icebound even when the solute concentration in the ice slurry is high, and thus the salt does not intrude into the fresh marine products.

It is suitable that the solute concentrations in flake ice and salt water to be mixed for producing the ice slurry are about the same (concentration difference: several percent). In a case in which the solute concentration in flake ice is higher than the solute concentration in salt water, the moisture freezes immediately after the salt water having a lower solute concentration is mixed since the temperature of the flake ice is lower than the saturated freezing point of the salt water. On the other hand, in a case in which the solute concentration in flake ice is lower than the solute concentration in salt water, the flake ice melts and the temperature of the ice slurry decreases since the saturated freezing point of the salt water is lower than the saturated freezing point of the flake ice. Consequently, it is desirable to set the solute concentrations in flake ice and salt water to be mixed to be about the same in order not to change the state of the ice slurry.

The mass ratio between flake ice and salt water to be mixed is set to flake ice : salt water = 75 : 25 to 20 : 80 and preferably flake ice : salt water = 60 : 40 to 50 : 50. Incidentally, when the mass ratio of flake ice exceeds 75 mass%, the ratio of solid content increases and thus a gap is formed between the fresh marine products and the ice slurry and the ice slurry 3 does not come to close contact with the fresh marine products. On the other hand, when the mass ratio of ice is less than 20 mass%, it is difficult to instantaneously freeze fresh marine products with the produced ice slurry.

In other words, in a case in which the brine is salt water, an ice slurry is produced by mixing flake ice generated from salt water having a solute concentration (concentration of brine) of from 13.6% to 23.1% by using the flake ice production device 10 and salt water having a solute concentration of from 13.6% to 23.1%. In the present embodiment, the temperature of the produced ice slurry is set to from -9.8°C to -21.2°C. The temperature of the salt water to be mixed with the produced flake ice is set to room temperature or a temperature lower than room temperature. Incidentally, the ice making efficiency is higher as the temperature of the salt water is lower.

Incidentally, in a case in which the brine is other than salt water, the concentration of brine and the mass ratio between flake ice and brine to be mixed are adjusted so that the temperature of the ice slurry to be produced reaches the temperature required. It is possible to produce ice slurries at plural kinds of temperatures by adjusting the concentration of brine and the mass ratio between flake ice and brine to be mixed in this manner.

Embodiments of the present invention have been described above, but the present invention is not in any way limited to the configurations described in the above-mentioned embodiments, and the present invention also includes other embodiments and modifications that can be considered within the scope of the matters described in the claims. In addition, various modifications and combinations of the above-mentioned embodiments may be applied as long as they do not deviate from the gist of the present invention.

For example, the ice making device of the present invention is not required to have a configuration as the flake ice production device 10 illustrated in Fig. 1 as an embodiment, and it may be any ice making device including the constituents of the present invention. In addition, the ice generated by using the ice making device of the present invention is desirably ice which satisfies the conditions (a) and (b) and is from a liquid that includes an aqueous solution including a solute, but it may be ice which does not satisfy either or both of the conditions (a) and (b). In other words, the article to be cold reserved may be cold reserved using an ice slurry composed of ice and water which have different solute concentrations.

In addition, according to the flake ice production device 10 according to an embodiment of the ice making device of the present invention, it is possible to efficiently produce flake ice having an arbitrary temperature and thus to compact the size of the flake ice production device 10 itself. This makes it possible to mount the flake ice production device 10 having a smaller volume with respect to the volume of the entire cold reserved article to be loaded on, for example, a moving body such as a vehicle, a ship, or an aircraft for transporting the article to be cold reserved. In other words, an ice slurry for cooling the article to be cold reserved is required in proportion to the amount of the article to be cold reserved, which is the target of transportation, in the case of transporting an article to be cold reserved, but understandably, the maximum loading capacity is set for a vehicle, a ship, and an aircraft for transporting an article to be cold reserved. It is required to minimize the amount of ice slurry to the extent to which the cooling effect can be maintained in order to maximize the loading amount of the article to be cold reserved in this maximum loading capacity range. At this time, the compacted flake ice production device 10 has a smaller volume with respect to the volume of the entire cold reserved article to be loaded and it is thus possible to maximize the loading amount of the article to be cold reserved in this maximum loading capacity range.

In addition, a serration 15a touches the wall surface of the inner cylinder 22 when stripping off the ice adhered to the wall surface of the inner cylinder 22. For this reason, the wall surface of the inner cylinder 22 is likely to be worn and degraded. The degradation is remarkable particularly in the case of a material, which is softer than the serration 15a, such as copper. In order to cope with this, a replaceable liner can be mounted on the wall surface of the inner cylinder 22 although it is not illustrated. This makes it possible to maintain the quality of the wall surface of the inner cylinder 22 only by replacing the liner without conducting a large-scaled repair work to replace the entire inner cylinder 22 or the entire drum 11. At this time, it is desirable that the liner is the same material as the wall surface of the inner cylinder 22 in the case of considering the uniformity of the thermal conductivity, but it may not be the same material. A method of mounting the liner on the wall surface of the inner cylinder 22 is not particularly limited. For example, the liner may be mounted on the wall surface of the inner cylinder 22 so as to be screwed into the drum 11 by providing a spiral groove on each of the liner and the wall surface of the inner cylinder 22 to be in contact with the liner to have a shape like a coarse pitch screw. Alternatively, the liner may be temporarily cooled to contract the volume and then mounted on the wall surface of the inner cylinder 22. In this case, the volume of the liner expands when the temperature of the liner returns to room temperature and thus the liner can be brought into close contact with and fixed to the wall surface of the inner cylinder 22. Incidentally, fine irregularities may be formed on the surface on which the wall surface of the inner cylinder 22 and the liner come in close contact with each other by using sandpaper or the like in the case of adopting a configuration in which the liner is mounted on the wall surface of the inner cylinder 22. This makes it also possible to generate a certain amount of frictional force on the surface on which the wall surface of the inner cylinder 22 and the liner come in close contact with each other, and thus it is also possible to prevent an accident that the liner slips off from the wall surface of the inner cylinder 22 and falls off.

In addition, salt water (aqueous solution of sodium chloride) is adopted as brine in the above-described embodiments, but it is not particularly limited. Specifically, it is possible to adopt, for example, an aqueous solution of calcium chloride, an aqueous solution of magnesium chloride, ethylene glycol, and the like. This makes it also possible to prepare plural kinds of brine having different freezing points depending on the difference in solute or concentration.

In addition, in a case in which the ice slurry including ice generated by using the ice making device of the present invention includes a solid having a higher thermal conductivity than the ice generated by using the ice making device of the present invention, it is preferable that cooling is conducted such that the solid having a higher thermal conductivity than the ice generated by using the ice making device of the present invention is interposed between the ice included in the ice slurry and the article to be cooled in the step of cooling an article to be cooled. By this, long-time cooling of the article to be cooled is also possible while obtaining a short-time cooling capacity by the solid having a high thermal conductivity. In such a case, another substance may be interposed between every two of the ice, the solid having a higher thermal conductivity than the ice, and the article to be cooled depending on the purpose. For example, in a case in which the ice slurry includes a substance which is not preferred to be brought into direct contact with the article to be cooled (for example, solid not preferable to be brought into contact with the article to be cooled from the viewpoint of safety, having a higher thermal conductivity than the ice (metal such as copper or the like), and the like), cooling may be conducted such that either of the ice slurry or the article to be cooled is housed in a bag and thus the ice slurry and the article to be cooled are not brought into direct contact with each other.

The ice generated by using the flake ice production device 10 can also be utilized in, for example, the following applications in addition to the cooling of an article to be cooled in this manner. In other words, the ice can also be utilized for freezing of industrial waste liquid, freezing of manure, liquefaction of gas, and the like.

Summarizing the above, the ice making device to which the present invention is applied can take various embodiments as long as it has the following configuration. In other words, the ice making device (for example, the flake ice production device 10 in Fig. 1) to which the present invention is applied includes: an ice making unit (for example, the inner cylinder 22, the outer cylinder 23, and the refrigerant clearance 24 in Fig. 1) which has an ice making surface (for example, the wall surface of the inner cylinder 22 in Fig. 1) and a cooling unit (for example, the inner cylinder 22 in Fig. 1) for cooling the ice making surface and generates ice by freezing brine adhered to the ice making surface cooled, a brine supply unit (for example, the spraying unit 13 in Fig. 1) for supplying the brine to the ice making surface by causing the brine to adhere to the ice making surface, and a collecting unit (for example, the stripping unit 14 in Fig. 1) for collecting the ice generated by the ice making unit, and is designed such that the following formula (1) is satisfied when Y represents the ice making speed indicating the amount of ice generated per unit time and x1 represents the thermal conductivity of the ice making surface in the ice making unit.

$$Y = f(x1) \quad (1)$$

This makes it possible to realize a technique which enables more efficient generation of ice having a high cooling capacity.

In addition, the ice making surface can be constituted by copper. This makes it possible to more efficiently generate ice having a high cooling capacity.

In addition, the ice making device can be designed such that the following formula (2) is satisfied when Y represents the ice making speed and x2 represents the area of the part onto which the brine possibly adheres of the ice making surface.

$$Y = f(x2) \quad (2)$$

This makes it possible to adjust the ice making speed by adjusting the area of the part onto which the brine possibly adheres of the ice making surface.

In addition, the ice making device can further include a refrigerant supply unit (for example, the refrigerant supply unit 29 in Fig. 1) for supplying a predetermined refrigerant to the cooling unit in order to cool the ice making surface and can be designed such that the following formula (3) is satisfied when Y represents the ice making speed and x3 represents the temperature of the ice making surface.

$$Y = f(x3) \quad (3)$$

This makes it possible to adjust the ice making speed as the refrigerant is selected and the temperature of the ice making surface is adjusted.

In addition, the brine supply unit can cause the brine to adhere to the ice making surface through spraying. In addition, the brine supply unit can cause the brine to adhere to the ice making surface through gravity flow. This makes it possible to adjust the ice making speed depending on the method of causing the brine to adhere to the ice making surface.

In addition, the ice making surface can be constituted by copper, and the refrigerant can be LNG. This makes it possible to efficiently generate even the ice having an extremely low temperature, and it is thus possible to easily produce flake ice matched to the widely required cold reserving temperature.

In addition, the ice making unit can further include a liner for covering the ice making surface, and the liner can be set to be replaceable. This makes it possible to maintain the quality of the ice making surface only by replacing the liner without conducting a large-scaled repair work to replace the entire ice making unit.

In addition, the flake ice production device to which the present invention is applied can include the ice making unit, the brine supply unit, and the collecting unit, the ice making unit can further include a drum including an inner cylinder having the ice making surface, an outer cylinder surrounding the inner cylinder, and a clearance formed between the inner cylinder and the outer cylinder and a refrigerant supply unit for supplying a refrigerant to the clearance, the brine supply unit can further include an spraying unit which rotates together with a rotary shaft rotating by taking the central axis of the drum as the axis and sprays the brine toward the ice making surface of the inner cylinder, the collecting unit can further include a stripping unit for stripping off ice generated as the brine sprayed through the spraying unit adheres to the inner surface of the inner cylinder cooled by the refrigerant supplied to the clearance, and the flake ice production device can be designed such that the formula (1) is satisfied when Y represents the ice making speed indicating the amount of ice generated per unit time and x1 represents the thermal conductivity of the ice making surface in the ice making unit. This makes it possible to more efficiently generate ice having a high cooling capacity.

In addition, the thermal conductivity of the ice making surface at 20°C can be set to 70 W/mK or more. In addition, the flake ice production device can be designed such that the formula (2) is satisfied when Y represents the ice making speed and x2 represents the area of the part onto which the brine possibly adheres of the ice making surface. In addition, the flake ice production device can be designed such that the formula (3) is satisfied when Y represents the ice making speed and x3 represents the temperature of the ice making surface.

In addition, the brine supply unit can cause the brine to adhere to the ice making surface through gravity flow. In addition, the refrigerant can be LNG. In addition, the ice making unit can further include a liner for covering the ice making surface, and the liner can be set to be replaceable.

In addition, the flake ice production device of an aspect of the present invention can be mounted on a moving body. This makes it possible to efficiently produce flake ice having an arbitrary temperature and thus to compact the size of the flake ice production device itself. Hence, it is possible to mount the flake ice production device having a smaller volume with respect to the volume of the entire cold reserved article to be loaded on, for example, a vehicle, a ship, and an aircraft for transporting the article to be cold reserved.

**EXPLANATION OF REFERENCE NUMERALS**

10: Flake ice production device, 11: Drum, 12: Rotary shaft, 12a: Vertical hole, 13: Spraying unit, 13a: Spraying hole, 14: Stripping unit, 15: Blade, 15a: Serration, 16: Flake ice discharge port, 17: Upper bearing member, 19: Heat insulating protective cover, 20: Geared motor, 21: Rotary joint, 22: Inner cylinder, 23: Outer cylinder, 24: Refrigerant clearance, 27: Rotation control unit, 28: Bush, 29: Refrigerant supply unit, 30: Brine storage tank, 31: Pump, 32: Brine tube, 33: Brine tank, 34: Flake ice storage tank, 35: Refrigerant tube, 36: Freezing point adjusting unit, and 60: Flake ice production system

**Claims**

1. An ice making device comprising:

an ice making unit which has an ice making surface and a cooling unit for cooling the ice making surface and generates ice by freezing brine adhered to the ice making surface cooled;
a brine supply unit for supplying the brine to the ice making surface by causing the brine to adhere to the ice making surface; and
a collecting unit for collecting the ice generated by the ice making unit,
wherein
the ice making device is designed such that the following formula (1) is satisfied when Y represents an ice making speed indicating an amount of ice generated per unit time and x1 represents a thermal conductivity of the ice making surface in the ice making unit.

$$Y = f(x1) \quad (1)$$

2. The ice making device according to claim 1, wherein a thermal conductivity of the ice making surface at 20°C is 70 W/mK or more.

3. The ice making device according to claim 1 or 2, wherein the ice making device is designed such that the following formula (2) is satisfied when Y represents the ice making speed and x2 represents an area of a part onto which the brine possibly adheres of the ice making surface.

$$Y = f(x2) \quad (2)$$

4. The ice making device according to any one of claims 1 to 3, further comprising:

a refrigerant supply unit for supplying a predetermined refrigerant to the cooling unit in order to cool the ice making surface, wherein
the ice making device is designed such that the following formula (3) is satisfied when Y represents the ice making speed and x3 represents a temperature of the ice making surface.

$$Y = f(x3) \quad (3)$$

5. The ice making device according to any one of claims 1 to 4, wherein the brine supply unit causes the brine to adhere to the ice making surface through spraying.

6. The ice making device according to any one of claims 1 to 4, wherein the brine supply unit causes the brine to adhere to the ice making surface through gravity flow.

7. The ice making device according to claim 4, wherein the refrigerant is LNG.

8. The ice making device according to any one of claims 1 to 7, wherein the ice making unit further includes a liner for covering the ice making surface, and the liner is replaceable.

9. A flake ice production device comprising: the ice making unit according to claim 1, the brine supply unit according to claim 1, and the collecting unit according to claim 1, wherein the ice making unit further includes a drum including an inner cylinder having the ice making surface, an outer cylinder surrounding the inner cylinder, and a clearance formed between the inner cylinder and the outer cylinder and a refrigerant supply unit for supplying a refrigerant to the clearance, the brine supply unit further includes an spraying unit which rotates together with a rotary shaft rotating by taking a central axis of the drum as an axis and sprays the brine toward the ice making surface of the inner cylinder, the collecting unit further includes a stripping unit for stripping off ice generated as the brine sprayed through the spraying unit adheres to the inner surface of the inner cylinder cooled by the refrigerant supplied to the clearance, and the flake ice production device is designed such that the formula (1) is satisfied when Y represents an ice making speed indicating an amount of ice generated per unit time and x1 represents a thermal conductivity of the ice making surface in the ice making unit.

10. The flake ice production device according to claim 9, wherein a thermal conductivity of the ice making surface at 20°C is 70 W/mK or more.

11. The flake ice production device according to claim 9 or 10, wherein the flake ice production device is designed such that the formula (2) is satisfied when Y represents the ice making speed and x2 represents an area of a part onto which the brine possibly adheres of the ice making surface.

12. The flake ice production device according to any one of claims 9 to 11, further comprising:
a refrigerant supply unit for supplying a predetermined refrigerant to the cooling unit in order to cool the ice making surface, wherein the flake ice production device is designed such that the formula (3) is satisfied when Y represents the ice making speed and x3 represents a temperature of the ice making surface.

13. The flake ice production device according to any one of claims 9 to 12, wherein the brine supply unit causes the brine to adhere to the ice making surface through spraying.

14. The flake ice production device according to any one of claims 9 to 12, wherein the brine supply unit causes the brine to adhere to the ice making surface through gravity flow.

15. The flake ice production device according to claim 9, wherein the refrigerant is LNG.

16. The flake ice production device according to any one of claims 9 to 15, wherein the ice making unit further includes a liner for covering the ice making surface, and the liner is replaceable.

17. A method for producing flake ice using the flake ice production device according to any one of claims 9 to 16.

18. A moving body comprising the flake ice production device according to any one of claims 9 to 17 mounted.

# FIG. 1

# FIG. 2

| MATERIAL FOR MEMBER CONSTITUTING ICE MAKING SURFACE (TEMPERATURE) | THERMAL CONDUCTIVITY [W/m·K] |
|---|---|
| STAINLESS STEEL (20°C) | 16 |
| PURE IRON (20°C) | 67 |
| COPPER (ORDINARY) (20°C) | 372 |
| SILVER (20°C) | 418 |

FIG. 3

EP 3 378 320 A1

## INTERNATIONAL SEARCH REPORT

| International application No. |
| --- |
| PCT/JP2016/084320 |

### A. CLASSIFICATION OF SUBJECT MATTER
*A23B4/06*(2006.01)i, *A23L3/36*(2006.01)i, *F25C1/00*(2006.01)i, *F25D3/02*(2006.01)i

According to International Patent Classification (IPC) or to both national classification and IPC

### B. FIELDS SEARCHED

Minimum documentation searched (classification system followed by classification symbols)
A23B4/06, A23L3/36, F25C1/00, F25D3/02

Documentation searched other than minimum documentation to the extent that such documents are included in the fields searched
Jitsuyo Shinan Koho          1922-1996   Jitsuyo Shinan Toroku Koho   1996-2017
Kokai Jitsuyo Shinan Koho    1971-2017   Toroku Jitsuyo Shinan Koho   1994-2017

Electronic data base consulted during the international search (name of data base and, where practicable, search terms used)
JSTPlus/JMEDPlus/JST7580(JDreamIII), DWPI(Thomson Innovation)

### C. DOCUMENTS CONSIDERED TO BE RELEVANT

| Category* | Citation of document, with indication, where appropriate, of the relevant passages | Relevant to claim No. |
| --- | --- | --- |
| A | JP 2003-56953 A  (Hoshizaki Electric Co., Ltd.), 26 February 2003 (26.02.2003), (Family: none) | 1-18 |
| A | JP 6-56665 U  (Iceman Seihyoki Kogyo Kabushiki Kaisha), 05 August 1994 (05.08.1994), (Family: none) | 1-18 |
| A | JP 2013-36628 A  (Kabushiki Kaisha Izui Tekkosho), 21 February 2013 (21.02.2013), (Family: none) | 1-18 |

☒  Further documents are listed in the continuation of Box C.        ☐   See patent family annex.

| | | |
| --- | --- | --- |
| * | Special categories of cited documents: | "T"  later document published after the international filing date or priority date and not in conflict with the application but cited to understand the principle or theory underlying the invention |
| "A" | document defining the general state of the art which is not considered  to be of particular relevance | |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
| --- | --- |
| 24 February 2017 (24.02.17) | 07 March 2017 (07.03.17) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

**INTERNATIONAL SEARCH REPORT**

International application No.

PCT/JP2016/084320

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-162136 A (President of Tokyo Institute of Technology), 07 June 2002 (07.06.2002), (Family: none) | 1-18 |

Form PCT/ISA/210 (continuation of second sheet) (January 2015)

**EP 3 378 320 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016103637 A

- JP 2002115945 A